# EUROPEAN PATENT SPECIFICATION

(11) **EP 3 015 254 B1**
(45) Date of publication and mention of the grant of the patent: **29.07.2020**
(21) Application number: 15192769.6
(22) Date of filing: 03.11.2015
(51) Int. Cl.: B29C 70/44, B29C 70/54

(54) **A MOULD AND A METHOD FOR INFUSING A FABRIC WITH RESIN COMPOSITION**
FORM UND VERFAHREN ZUR INFUSION EINES STOFFES MIT EINER HARZZUSAMMENSETZUNG
MOULE ET PROCÉDÉ POUR INJECTER UNE COMPOSITION DE RÉSINE DANS UN TISSU

(30) Priority: 03.11.2014 NL 2013731
(43) Date of publication of application: 04.05.2016
(73) Proprietor: LM WIND POWER R&D (HOLLAND) B.V., 1703 DH Heerhugowaard (NL)
(72) Inventor: LAHUERTA CALAHORRA, Francisco, 1771 MV Wieringerwerf (NL); NIJSSEN, Rogier Pieter Louis, 1771 MV Wieringerwerf (NL)
(74) Representative: COPA Copenhagen Patents

(56) References cited:
- WO-A2-03/018297
- DE-A1-102010 025 068
- Ginger Gardiner: "Pushing the limits of infusion", Composites World Blog , 29 January 2014 (2014-01-29), pages 1-4, XP002742637, Retrieved from the Internet: URL:http://www.compositesworld.com/blog/po st/pushing-the-limits-of-infusion [retrieved on 2007-03-21]
- Ginger Gardiner: "Semipermeables: Next trend in infusion?", Composites Technology Composites Technology February 2014, 2 March 2014 (2014-03-02), pages 1-4, XP002742638, Retrieved from the Internet: URL:http://www.compositesworld.com/article s/semipermeables-next-trend-in-infusion [retrieved on 2014-07-23]

## Description

The present invention relates to a method for infusing a fabric, more in particular a fabric preform, with a resin composition according to the preamble of claim 1. The invention further relates to a mould for performing such method, as mentioned in claim 8.

A mould of this kind is known in the art. For example, it is known to infuse a fabric, for example a so-called preform, with a resin composition in a mould. Such process is generally known as a liquid moulding process. When vacuum is applied to assist transfer of the resin composition, the process is often referred to as vacuum-assisted resin transfer moulding. An example of a method as described in the preamble of claim 1 is given in Composites World Blog, "Pushing the limits of infusion" by G. Gardiner. The method described therein relates to a method for obtaining a full infusion of a hull of 10 m tall, starting from a bottom of said hull. This known method applies injection of resin at the bottom and vacuum at a relatively higher position along the hull side.

The resin composition may be comprised of a resin and a hardener, like a polymerization accelerator.

In accordance with the present invention, the term "resin composition" relates to all fluid compositions that can be infused into a fabric and that can be cured or otherwise hardened so as to obtain a fiber reinforced product.

A generally known and often occurring problem in these known processes, is the inclusion of dry spots or dead spots in the final product, meaning that no resin composition has reached said spots, thus weakening the final product. The publication mentioned above does not address this problem, but only relates to a filling of the hull and prevent the occurrence of porosity where a flow front ends when injecting the resin in multiple steps.

Therefore, there is need of an improved process for infusing fabrics with a resin composition.

The invention now aims at providing an improved method for infusing a fabric with a resin composition.

The invention especially aims at providing a method that reduces the risk of dry spots in a manufactured product.

The invention also aims at providing a method that enables one to obtain infusion in an exactly definable way.

So as to obtain at least one of the above mentioned goals, the present invention provides a method that comprises the features of claim 1. This method provides the advantage that infusion of a fabric is obtained extremely accurately. Furthermore, infusion may be obtained at a high speed, still maintaining the high accuracy, thus preventing the occlusion of dry spots.

As a consequence, the invention relates to a method for infusing a fabric preform with a resin composition, comprising the steps of: providing said fabric preform into a chamber that is at least partially comprised of a membrane permeable to a gas and not permeable to said resin; feeding said resin composition into said chamber; and removing gas from said chamber through said membrane, wherein said chamber comprises a plurality of supply orifices for feeding said resin composition into said chamber and for infusing said fabric, and in that said membrane is at least partially positioned at one side of said chamber and said plurality of supply orifices are positioned at an opposite side of said chamber.

According to the invention, said membrane is at least partially positioned at one side of said chamber and said plurality of supply orifices are positioned at an opposite side of said chamber. This proved to provide an excellent infusion. The fabric is usually positioned on a surface, which provides an easy way of feeding the resin composition through said surface and applying a suction force, for example a vacuum source, at the other side of the fabric. Hence, the invention provides a method in which the fabric is infused very thoroughly. Contrary to the state of the art, where a fabric is infused with a resin composition from a side thereof and a vacuum source is positioned at a top, thus yielding a worse infusion.

So as to provide an excellent infusion, among other advantages that become apparent from the present description, it is especially preferred for said chamber to be comprised of a deposition surface for positioning said fabric, said deposition surface comprising said plurality of supply orifices, wherein said membrane is covering said fabric at a side facing away from said supply orifices; and applying on said membrane at a side facing away from said fabric a vacuum pressure for removing gas from said chamber. In the present invention, the deposition surface is also identified as "deposition wall".

For removing gas from the chamber, it is preferred that the method comprises the step of covering said membrane with a substantially gas tight cover, said cover being positioned at a distance from said membrane. The source for removing gas from the chamber, i.e. the vacuum source or the like, is then connected to the space provided between the said gas tight cover and the membrane, such that gas is removed from the chamber in which the fabric is positioned and the resin composition is fed. The removal of gas from the chamber provides for an equal distribution of resin composition in said chamber and, hence, through said fabric.

The said membrane may be comprised of a flexible membrane, such that it conforms the shape of the fabric and the resin composition which is fed in said chamber. However, the said membrane may be of a predetermined shape hence controlling the shape of the product manufactured by the method.

So as to ensure a perfect withdrawal of gas from the chamber, especially if the gas tight membrane is a flexible membrane, it is preferred that a spacer is positioned between said membrane and said cover so as to ensure a substantially unobstructed gas flow between said cover and said membrane.

A very good infusion is obtained by means of a method wherein said supply orifice comprises an injection nozzle, inserted into said supply orifice from a side of said side wall facing away from said chamber; said injection nozzle comprising a resin inlet and a hardener inlet, wherein said inlets meet at a mixing chamber; and wherein the method comprises the step of feeding said resin and said hardener to said respective inlets, mixing said resin and said hardener in said mixing chamber, and injecting said resin composition in said chamber so as to infuse said fabric with said resin composition. This provides for an easy to apply method, wherein virtually no waste of resin composition substances is obtained. After performing the infusion method, the injection nozzles may be removed. For example, the injection nozzles may be removed after every infusion batch or they may be removed after a predetermined set of batches has been manufactured.

It is preferred to fill the chamber with resin in a predetermined following order so as to reduce the risk of obtaining dry spots to almost zero. Preferably, to that effect, the chamber comprises a gas outlet and wherein the method comprises a first step of injecting said resin composition at a position relatively far away from said gas outlet and a second, consecutive step of injecting said resin composition at a position relatively closer to said gas outlet.

In such embodiment, it is preferred that said first and second step at least partially overlap each other. For example, if the chamber has a matrix of 5x5 injection nozzles and a single gas outlet in the center of the chamber, the sixteen injection nozzles in the outermost row and column may be set to firstly feed resin composition into the chamber, while removing gas through said gas outlet. After sufficient resin composition has been fed into the room, such that the resin composition reaches the 8 injection nozzles of the more inwardly positioned row and column of 3x3 injection nozzles, these may be set to inject resin composition while closing the sixteen first nozzles, optionally continuing feeding resin composition through said sixteen injection nozzles. Finally, the most innermost nozzle may be opened so as to add resin through said nozzle as well. Anytime, if required, every combination of nozzles may be opened or closed either temporarily or consecutively.

As mentioned before, it is preferred that said chamber comprises a deposition surface for positioning said fabric, the method comprising the step of infusing said fabric in a direction substantially perpendicular to said deposition surface. Such is easily obtained when the injection nozzles are positioned at a first side of the fabric and the membrane is positioned at an opposite side thereof.

According to further aspect, the invention relates to a mould for performing an infusion method according to the invention, with a chamber for holding a fabric, said chamber comprising a deposition surface for positioning said fabric, said deposition surface comprising a plurality of supply orifices for feeding a resin composition into said chamber, said chamber further comprising a membrane covering said fabric at least at a side facing away from said supply orifices; wherein said mould further comprises a gas outlet at a side of the membrane facing away from the said chamber. This mould easily provides the advantages as mentioned before with respect to the invention.

So as to ensure a good evacuation of gas from the chamber, it is preferred that the mould comprises a substantially gas tight cover covering said membrane, said cover being positioned at a distance from said membrane. The vacuum source or other means for removing gas from the chamber is then preferably connected to said cover.

Especially if the cover is a flexible sheet like material, t is preferred that a spacer is positioned between said membrane and said cover so as to ensure a substantially unobstructed gas flow between said cover and said membrane, removing gas from said chamber, through said membrane and to said vacuum source.

An easy supply of resin composition is obtained where said supply orifices each comprise an injection nozzle; said injection nozzle comprising a resin inlet and a hardener inlet, wherein said inlets meet at a mixing chamber for mixing said resin and said hardener.

Removal of gas may be obtained by connecting the chamber to a means for removal of gas. Preferably, said gas outlet is connected to a vacuum source.

Hereafter, the invention will be further described with reference to a drawing. In the drawing:
Fig. 1 schematically shows a mould for performing the invention according to the present invention, and
Fig. 2 schematically shows an injection nozzle for use in a mould according to the present invention.

In the drawings, the same or analogous parts are denoted by means of the same reference numbers. However, for reason of simplicity, not all parts that are required for a practical embodiment have been shown in the drawing.

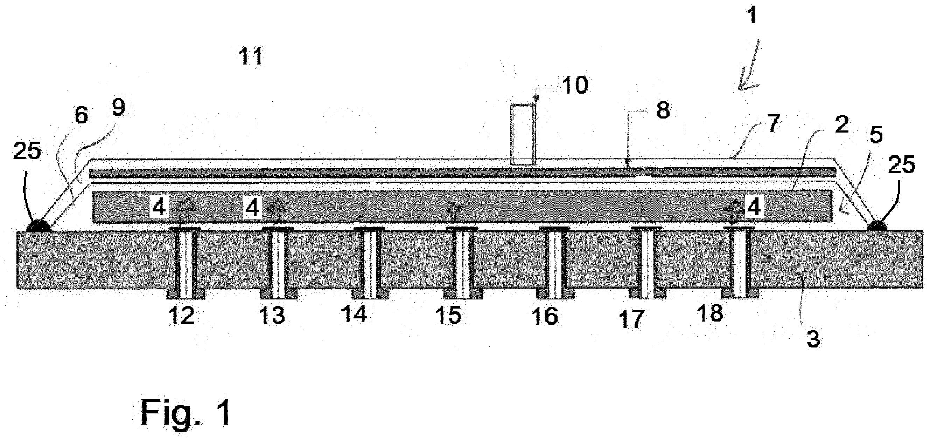

Fig. 1 shows a mould 1 for performing the method according to the present invention. The mould 1 is embodied for receiving a fabric 2, shown as a fabric preform 2. The fabric preform 2 is positioned on a deposition wall 3, hereinafter also called deposition surface 3. The mould 1 is embodied for performing a so-called vacuum-assisted resin transfer moulding. A resin composition 4 is fed into an area 5 comprising said fabric preform 2, so as to infuse into said fabric preform 2, yielding a fabric 2 that is infused with a resin composition 4.

The area 5 is embodied as a chamber 5. The area 5 is at a first side delimited by said deposition surface 3 carrying the fabric preform 2, and at another, opposite side, by a membrane 6. Hence, said deposition surface is embodied as a wall of said chamber 5. Said membrane 6 is covered by a gas tight layer 7, preferably a flexible sheet like material 7, but a substantially rigid material may be used as well. In case said layer 7 is comprised of a substantially flexible material, it is preferred that a spacer 8 is positioned in the space 9 between said membrane 6 and gas tight layer 7 so as to ensure a continuous flow of gases between said membrane 6 and layer 7 for removing gas from chamber 5.

Said membrane 6 is permeable to gases present in said chamber 5, but non-permeable to said resin 4. By applying a suction force on said chamber 5, preferably by connecting a suction means 10 to said gas tight layer 7 so as to apply a suction force, also called vacuum, on the space 9 between said membrane 6 and said gas tight layer 7, gas is removed from the chamber 5. As a consequence, resin composition 4 is evenly distributed in chamber 5 and throughout said fabric preform 2.

The membrane 6 and cover 7 may be positioned on top of said fabric preform 2, extending at sides thereof. The membrane 6 and cover 7 may be coupled in a gastight manner to said deposition surface 7 by means of a seal 25, so as to obtain a chamber 5 that is sealed from the atmosphere 11 as well as a space 9 that is sealed from the atmosphere 11 and chamber 5.

As can be seen in Fig. 1, a plurality of injection nozzles 12, 13, 14, 15, 16, 17, 18 is provided, each embodied for injecting a resin composition 4 into said chamber 5 so as to infuse fabric preform 2. Preferably, said injection nozzles are embodied as nozzles for limited use, such that these can be removed from the deposition surface 3 after having performed a single batch operation or optionally more than one batch operation.

The term "batch operation" relates to an operation wherein a fabric preform 2 is infused with a resin composition 4 and optionally hardened. However, hardening may be performed in another location. Two batch operations relate to two consecutive operations of positioning a fabric preform 2 in a chamber 5 and infusing same with a resin composition 4, optionally including the step of hardening same after the step of infusing the fabric preform 2.

Infusing may be performed by simultaneously injecting resin composition 4 through all nozzles 12, 13, 14, 15, 16, 17, 18 and simultaneously applying a suction force, for example a vacuum, on vacuum source 10. However, infusing said fabric preform 2 may be obtained by applying a suction force on the chamber 5 and firstly inject resin composition through nozzles 12 and 18 only. Then, after resin composition 4 has reached the exit positions of nozzles 13, 17 inside said chamber 5, nozzles 13, 17 may be opened so as to inject resin composition through nozzles 13, 17. Then, nozzles 12, 18 may optionally be closed. After resin composition 4 has reached the exit positions of nozzles 14, 16, said nozzles 14, 16 may be opened, optionally nozzle 15 as well, so as to completely fill chamber 5 and completely infuse said fabric preform 2 with resin composition 4.

Controlling the injection pressure of resin composition 4 through nozzles 13-18, the rate of filling is easily controlled.

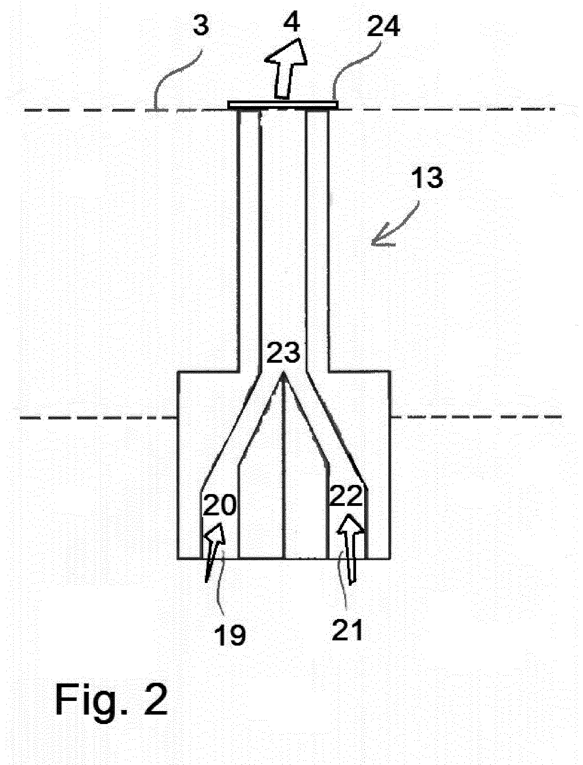

Fig. 2 shows a simplified cross section of a nozzle 13. As a matter of fact, all nozzles 13-18 are embodied identically. Nozzle 13 is shown schematically, as if incorporated in said deposition means 3 (dotted line).

The nozzle 13 comprises two separate inlets 19, 21, a first inlet 19 for resin 20 and a second inlet 21 for hardener 22. Said components 20, 22 are mixed in mixing chamber 23, so as to yield resin composition 4. The injection nozzle can be inserted in deposition wall 3, such that the resin composition 4 is evenly distributed in chamber 5. A peelable orifice fabric 24 may be provided on top of the nozzle 13 at the chamber 5. This peelable orifice fabric 24 is permeable to said resin composition 4 and protects nozzle 13. Said peelable orifice fabric 24 may remain on the product made in chamber 5 after removing same from the mould, or may remain on each nozzle 13-18 after removing said product from the mould.

The invention is not limited to the embodiments as shown in the drawing and as described above. The invention is only limited by the appending claims.

The invention has been described with reference to some specific combinations only. However, the invention also relates to features as defined in the appended claims.

## Claims

1. A method for infusing a fabric preform (2) with a resin composition, comprising the steps of: providing said fabric preform (2) into a chamber (5) that is at least partially comprised of a membrane (6) permeable to a gas and not permeable to said resin; feeding said resin composition into said chamber (5); and removing gas from said chamber (5) through said membrane (6), wherein said chamber (5) comprises a plurality of supply orifices for feeding said resin composition into said chamber (5) and for infusing said fabric (2), wherein said chamber (5) is comprised of a deposition surface (3) for positioning said fabric (2), said deposition surface (3) comprising said plurality of supply orifices, said membrane (6) is at least partially positioned at one side of said chamber (5) and **characterized in that** said plurality of supply orifices are positioned at an opposite side of said chamber (5), and **in that** said membrane (6) is covering said fabric at a side facing away from said supply orifices; and applying on said membrane (6) at a side facing away from said fabric a vacuum pressure for removing gas from said chamber (5).

2. A method according to claim 1, further comprising the step of covering said membrane (6) with a substantially gas tight cover (7), said cover (7) being positioned at a distance from said membrane (6).

3. A method according to claim 2, a spacer (8) being positioned between said membrane (6) and said cover (7) so as to ensure a substantially unobstructed gas flow between said cover (7) and said membrane (6).

4. A method according to any of the preceding claims, said supply orifice comprising an injection nozzle (12, 13, 14, 15, 16, 17, 18), inserted into said supply orifice from a side facing away from said chamber (5); said injection nozzle (12, 13, 14, 15, 16, 17, 18) comprising a resin inlet (19) and a hardener inlet (21), wherein said inlets (19, 21) meet at a mixing chamber (23); wherein the method comprises the step of feeding said resin (20) and said hardener (22) to said respective inlets, mixing said resin (20) and said hardener (22) in said mixing chamber (23), and injecting said resin composition (4) in said chamber (5) so as to infuse said fabric (2) with said resin composition (4).

5. A method according to any of the preceding claims, said chamber (5) comprising a gas outlet, said method comprising a first step of injecting said resin composition at a position relatively far away from said gas outlet and a second, consecutive step of injecting said resin composition at a position relatively closer to said gas outlet.

6. A method according to claim 5, said first and second step at least partially overlapping each other.

7. A method according to any of the preceding claims, said chamber (5) comprising a deposition surface (3) for positioning said fabric (2), the method comprising the step of infusing said fabric (2) in a direction substantially perpendicular to said deposition surface (3).

8. A mould (1) for performing an infusion method according to any of the preceding claims, with a chamber (5) for holding a fabric (2), said chamber (5) comprising a deposition surface (3) for positioning said fabric (2), said deposition surface (3) comprising a plurality of supply orifices for feeding a resin composition (4) into said chamber (5), said chamber (5) further comprising a membrane (6) suitable for covering said fabric (2) at least at a side facing away from said supply orifices; wherein said mould (1) further comprises a gas outlet at a side of the membrane (6) facing away from the said chamber (5).

9. A mould (1) according to claim 8, comprising a substantially gas tight cover (7) covering said membrane (6), said cover (7) being positioned at a distance from said membrane (6).

10. A mould (1) according to claim 8 or 9, comprising a spacer (8) being positioned between said membrane (6) and said cover (7) so as to ensure a substantially unobstructed gas flow between said cover (7) and said membrane (6).

11. A mould (1) according to claim 8 - 10, wherein said supply orifices each comprise an injection nozzle (12, 13, 14, 15, 16, 17, 18); said injection nozzle (12, 13, 14, 15, 16, 17, 18) comprising a resin inlet (19) and a hardener inlet (21), wherein said inlets (19, 21) meet at a mixing chamber (23) for mixing said resin (20) and said hardener (22).

12. A mould (1) according to any of claims 8 - 11, wherein said gas outlet is connected to a vacuum source (10).

## Patentansprüche

1. Verfahren zum Tränken eines Textilstoffvorformlings (2) mit einer Harzzusammensetzung, umfassend folgende Schritte: Bereitstellen des Textilstoffvorformlings (2) in einer Kammer (5), die mindestens teilweise aus einer für ein Gas durchlässigen und für das Harz nicht durchlässigen Membran (6) besteht; Einspeisen der Harzzusammensetzung in die Kammer (5); und Abführen von Gas aus der Kammer (5) durch die Membran (6), wobei die Kammer (5) eine Vielzahl von Zuführöffnungen zum Einspeisen der Harzzusammensetzung in die Kammer (5) und zum Tränken des Textilstoffs (2) umfasst, wobei die Kammer (5) aus einer Ablagefläche (3) zum Positionieren des Textilstoffs (2) besteht, wobei die Ablagefläche (3) die Vielzahl von Zuführöffnungen umfasst, wobei die Membran (6) mindestens teilweise auf einer Seite der Kammer (5) positioniert ist, und **dadurch gekennzeichnet, dass** die Vielzahl von Zuführöffnungen auf einer gegenüberliegenden Seite der Kammer (5) positioniert ist, und dadurch, dass die Membran (6) den Textilstoff auf einer den Zuführöffnungen abgewandten Seite abdeckt; und Anlegen eines Vakuumdrucks zum Abführen von Gas aus der Kammer (5) an die Membran (6) auf einer dem Textilstoff abgewandten Seite.

2. Verfahren nach Anspruch 1, ferner umfassend den Schritt des Abdeckens der Membran (6) mit einer im Wesentlichen gasdichten Abdeckung (7), wobei die Abdeckung (7) in einem Abstand von der Membran (6) positioniert ist.

3. Verfahren nach Anspruch 2, wobei ein Abstandhalter (8) zwischen der Membran (6) und der Abdeckung (7) positioniert ist, um einen im Wesentlichen ungehinderten Gasstrom zwischen der Abdeckung (7) und der Membran (6) sicherzustellen.

4. Verfahren nach einem der vorangehenden Ansprüche, wobei die Zuführöffnung eine Einspritzdüse (12, 13, 14, 15, 16, 17, 18) umfasst, die von einer der Kammer (5) abgewandten Seite aus in die Zuführöffnung eingesteckt ist; wobei die Einspritzdüse (12, 13, 14, 15, 16, 17, 18) einen Harzeinlass (19) und einen Härtereinlass (21) umfasst, wobei die Einlässe (19, 21) an einer Mischkammer (23) zusammentreffen; wobei das Verfahren den Schritt des Einspeisens des Harzes (20) und des Härters (22) in die entsprechenden Einlässe, das Mischen des Harzes (20) und des Härters (22) in der Mischkammer (23) und das Einspritzen der Harzzusammensetzung (4) in die Kammer (5), um den Textilstoff (2) mit der Harzzusammensetzung (4) zu tränken, umfasst.

5. Verfahren nach einem der vorangehenden Ansprüche, wobei die Kammer (5) einen Gasauslass umfasst, wobei das Verfahren einen ersten Schritt des Einspritzens der Harzzusammensetzung an einer relativ weit von dem Gasauslass entfernten Stelle und einen zweiten, darauf folgenden Schritt des Einspritzens der Harzzusammensetzung an einer relativ näher bei dem Gasauslass liegenden Stelle umfasst.

6. Verfahren nach Anspruch 5, wobei der erste und der zweite Schritt einander mindestens teilweise überlappen.

7. Verfahren nach einem der vorangehenden Ansprüche, wobei die Kammer (5) eine Ablagefläche (3) zum Positionieren des Textilstoffs (2) umfasst, wobei das Verfahren den Schritt des Tränkens des Textilstoffs (2) in einer im Wesentlichen zu der Ablagefläche (3) senkrechten Richtung umfasst.

8. Formwerkzeug (1) zum Ausführen eines Tränkungsverfahrens nach einem der vorangehenden Ansprüche mit einer Kammer (5) zum Aufnehmen eines Textilstoffs (2), wobei die Kammer (5) eine Ablagefläche (3) zum Positionieren des Textilstoffs (2) umfasst, die Ablagefläche (3) eine Vielzahl von Zuführöffnungen zum Einspeisen einer Harzzusammensetzung (4) in die Kammer (5) umfasst, die Kammer (5) ferner mindestens auf einer den Zuführöffnungen abgewandten Seite eine zum Abdecken des Textilstoffs (2) geeignete Membran (6) umfasst; wobei das Formwerkzeug (1) ferner einen Gasauslass auf einer der Kammer (5) abgewandten Seite der Membran (6) umfasst.

9. Formwerkzeug nach Anspruch 8, umfassend eine die Membran (6) abdeckende im Wesentlichen gasdichte Abdeckung (7), wobei die Abdeckung (7) in einem Abstand von der Membran (6) positioniert ist.

10. Formwerkzeug (1) nach Anspruch 8 oder 9, umfassend einen zwischen der Membran (6) und der Abdeckung (7) positionieren Abstandhalter (8), um einen im Wesentlichen ungehinderten Gasstrom zwischen der Abdeckung (7) und der Membran (6) sicherzustellen.

11. Formwerkzeug (1) nach Anspruch 8-10, wobei die Zuführöffnungen jeweils eine Einspritzdüse (12, 13, 14, 15, 16, 17, 18) umfassen; wobei die Einspritzdüse (12, 13, 14, 15, 16, 17, 18) einen Harzeinlass (19) und einen Härtereinlass (21) umfasst, wobei die Einlässe (19, 21) an einer Mischkammer (23) zum Mischen des Harzes (20) und des Härters (22) zusammentreffen.

12. Formwerkzeug (1) nach einem der Ansprüche 8-11, wobei der Gasauslass mit einer Vakuumquelle (10) verbunden ist.

## Revendications

1. Procédé servant à infuser une préforme de tissu (2) au moyen d'une composition de résine, comportant les étapes consistant à : mettre en œuvre ladite préforme de tissu (2) jusque dans une chambre (5) qui est au moins partiellement constituée d'une membrane (6) perméable à un gaz et non perméable à ladite résine ; alimenter ladite composition de résine jusque dans ladite chambre (5) ; et retirer le gaz en provenance de ladite chambre (5) au travers de ladite membrane (6), dans lequel ladite chambre (5) comporte une pluralité d'orifices d'alimentation pour alimenter ladite composition de résine jusque dans ladite chambre (5) et pour infuser ledit tissu (2), dans lequel ladite chambre (5) est constituée d'une surface de dépôt (3) servant à positionner ledit tissu (2), ladite surface de dépôt (3) comportant ladite pluralité d'orifices d'alimentation, ladite membrane (6) est positionnée au moins partiellement au niveau d'un côté de ladite chambre (5) et **caractérisé en ce que** les orifices de ladite pluralité d'orifices d'alimentation sont positionnés au niveau d'un côté opposé de ladite chambre (5), et **en ce que** ladite membrane (6) recouvre ledit tissu au niveau d'un côté orienté à l'opposé desdits orifices d'alimentation ; et appliquer sur ladite membrane (6) au niveau d'un côté orienté à l'opposé dudit tissu une pression par le vide pour retirer le gaz en provenance de ladite chambre (5).

2. Procédé selon la revendication 1, comportant par ailleurs l'étape consistant à recouvrir ladite membrane (6) au moyen d'un revêtement sensiblement étanche au gaz (7), ledit revêtement (7) étant positionné à une distance de ladite membrane (6).

3. Procédé selon la revendication 2, une butée d'espacement (8) étant positionnée entre ladite membrane (6) et ledit revêtement (7) de manière à assurer un écoulement de gaz sensiblement libre entre ledit revêtement (7) et ladite membrane (6).

4. Procédé selon l'une quelconque des revendications précédentes, ledit orifice d'alimentation comportant une buse d'injection (12, 13, 14, 15, 16, 17, 18), insérée jusque dans ledit orifice d'alimentation depuis un côté orienté à l'opposé de ladite chambre (5) ; ladite buse d'injection (12, 13, 14, 15, 16, 17, 18) comportant une entrée de résine (19) et une entrée de durcisseur (21), dans lequel lesdites entrées (19, 21) se rejoignent au niveau d'une chambre de mélange (23) ; dans lequel le procédé comporte l'étape consistant à alimenter ladite résine (20) et ledit durcisseur (22) jusqu'auxdites entrées respectives, l'étape consistant à mélanger ladite résine (20) et ledit durcisseur (22) dans ladite chambre de mélange (23), et l'étape consistant à injecter ladite composition de résine (4) dans ladite chambre (5) de manière à infuser ledit tissu (2) au moyen de ladite composition de résine (4).

5. Procédé selon l'une quelconque des revendications précédentes, ladite chambre (5) comportant une sortie de gaz, ledit procédé comportant une première étape consistant à injecter ladite composition de résine au niveau d'une position relativement éloignée de ladite sortie de gaz et une deuxième étape consécutive consistant à injecter ladite composition de résine au niveau d'une position relativement plus proche de ladite sortie de gaz.

6. Procédé selon la revendication 5, lesdites première et deuxième étapes se chevauchant au moins partiellement l'une par rapport à l'autre.

7. Procédé selon l'une quelconque des revendications précédentes, ladite chambre (5) comportant une surface de dépôt (3) servant à positionner ledit tissu (2), le procédé comportant l'étape consistant à infuser ledit tissu (2) dans une direction sensiblement perpendiculaire par rapport à ladite surface de dépôt (3).

8. Moule (1) servant à effectuer un procédé d'infusion selon l'une quelconque des revendications précédentes, une chambre (5) servant à retenir un tissu (2), ladite chambre (5) comportant une surface de dépôt (3) servant à positionner ledit tissu (2), ladite surface de dépôt (3) comportant une pluralité d'orifices d'alimentation servant à alimenter une composition de résine (4) jusque dans ladite chambre (5), ladite chambre (5) comportant par ailleurs une membrane (6) appropriée pour recouvrir ledit tissu (2) au moins au niveau d'un côté orienté à l'opposé desdits orifices d'alimentation ; dans lequel ledit moule (1) comporte par ailleurs une sortie de gaz au niveau d'un côté de la membrane (6) orienté à l'opposé de ladite chambre (5).

9. Moule (1) selon la revendication 8, comportant un revêtement sensiblement étanche au gaz (7) recouvrant ladite membrane (6), ledit revêtement (7) étant positionné à une distance de ladite membrane (6).

10. Moule (1) selon la revendication 8 ou la revendication 9, comportant une butée d'espacement (8) qui est positionnée entre ladite membrane (6) et ledit revêtement (7) de manière à assurer un écoulement de gaz sensiblement libre entre ledit revêtement (7) et ladite membrane (6).

11. Moule (1) selon les revendications 8 à 10, dans lequel lesdits orifices d'alimentation comportent chacun une buse d'injection (12, 13, 14, 15, 16, 17, 18) ; ladite buse d'injection (12, 13, 14, 15, 16, 17, 18) comportant une entrée de résine (19) et une entrée de durcisseur (21), dans lequel lesdites entrées (19, 21) se rejoignent au niveau d'une chambre de mélange (23) pour mélanger ladite résine (20) et ledit durcisseur (22).

12. Moule (1) selon l'une quelconque des revendications 8 à 11, dans lequel ladite sortie de gaz est raccordée à une source de vide (10).
